# EUROPEAN PATENT APPLICATION

(11) **EP 1 603 295 A2**
(43) Date of publication of application: **07.12.2005**
(21) Application number: 05012029.4
(22) Date of filing: 03.06.2005
(51) Int. Cl.: H04L 27/26

(54) **Filter-bank-modulation-based multiple access technique**

(30) Priority: 05.06.2004 KR 2004041158
(71) Applicant: SAMSUNG ELECTRONICS CO., LTD., Suwon-si, Gyeonggi-do (KR); Postech Foundation, Pohang-si, Gyeoungsangbuk-do (KR)
(72) Inventor: Kim, Eung-Sun, Yeongtong-gu Suwon-si Gyeonggi-do (KR); Lee, Jong-Hyeuk, Yeongtong-gu Suwon-si Gyeonggi-do (KR); Im, Gi-Hong, Dept. of Electronic & Electrical Eng, Nam-gu Pohang-si Gyeongsangbuk-do (KR); Park, Cheol-Jin, Dept. of Electronic & Elect. Eng., Nam-gu Pohang-si Gyeongsangbuk-do (KR)
(74) Representative: Grünecker, Kinkeldey, Stockmair & Schwanhäusser Anwaltssozietät

(57) **Abstract**

Disclosed is a multicarrier-based wireless communication system including a base station for providing a multiple access service to terminals which filter multitone transmitting signals through filters and transmit the filtered signals. A transmitter of the respective terminals includes a multiplexer for multiplexing an input signal and outputting the signal as a plurality of transmitting signals, at least one filter bank for filtering the plurality of transmitting signals, an inverse fast Fourier transformer for executing inverse fast Fourier transform of the filtered transmitting signals output from the filter bank, and a filter information generator for providing filter information to the filter bank. Since the transmitter of the present invention distinguishes users from each other by a filter and thus no synchronization is required between users, which causes a problem in an uplink of the multicarrier-based wireless communication system, system performance can be expected to be improved.

## Description

### BACKGROUND OF THE INVENTION

### 1. Field of the Invention

The present invention relates to a multicamer-based wireless communication system, and more particularly to a transmitter and a transmitting method to which an improved filter bank modulation (FBM) technique is applied.

### 2. Description of the Related Art

One of constraints which have an influence on the realization of a high-speed wireless communication is intersymbol interference (ISI) due to a multipath, including an additive noise. When delay spreading due to a multipath is less than one sending symbol interval, the influence of the ISI may be neglected, which means that a symbol rate is limited by a channel response. One method for overcoming such limitation is a multicarrier modulation technique in which data symbols are transmitted in parallel within each of the so-called subchannels by using a series of subcarriers. This method permits a subchannel symbol interval to exceed the channel response length, thereby making it possible to transmit data at a high rate.

There are a variety of methods for transmitting a multicarrier signal, and these multicarrier transmission methods can be generally divided into a superimposed multicarrier transmission method and a non-superimposed multicarrier transmission method according to whether or not sub-frequency bands arc superimposed in splitting a frequency spectrum.

Multicarrier methods used in the current standards such as a digital audio broadcast, asymmetric digital subscriber loops (ASDL), high performance radio local area network (HIPERLAN) belong to the superimposed multicarrier transmission method in which adjacent carriers are superimposed. In the superimposed multicarrier transmission method, a guard interval is interposed in each transmission symbol in order to prevent the ISI which is generated in a multipath and destroys orthogonality.

If the guard interval has length greater than the maximum delay time on a wireless channel, the ISI is not generated and orthogonality between subcarriers can be also maintained.

In this case, the multipath changes only an amplitude and a phase of a subcarrier signal and they can be readily equalized by a series of complex gain coefficients. However, a transmission efficiency is lowered as the delay spreading of a channel gets longer and longer. These methods are known as discrete multitone (DMT) modulation or orthogonal frequency division multiplexing (OFDM) in a wireless communication system.

In a filtered multitone (FMT) modulation method, to the contrary, a frequency spectrum is composed in a non-superimposed manner. In such a FMT modulation method, each subchannel characteristic is properly shaped in a frequency region and signal equalization per subchannel is executed on the receiving side. The FMT modulation method is based on M-branch filters which correspond to the frequency-shifted versions of a low-pass prototype (certain filter bank). The prototype filter has a high-level spectral containment characteristic enough to neglect interchannel interference (ICI) as compared to other noise signals within a system and to make subcarriers nearly orthogonal to each other, regardless of the length of a multipath channel. In this way, the FMT does not require a cyclic prefix, which is used in the DMT/OFDM, for maintaining orthogonality of subcarriers in a multipath environment, thus increasing overall capacity. In order to diminish the intersymbol interference still remaining, however, channel-by-channel equalization is needed.

An orthogonal frequency division multiple access (OFDMA) method may be easily applied to a downlink in a mobile communication system, but it is difficult to expect an OFDMA performance required for a uplink because frame synchronization between users is required but not easy to obtain. As one solution to this problem, applying a filter bank modulation (FBM)-based multicarrier method not requiring synchronization between users who use different subchannels from each other has been considered.

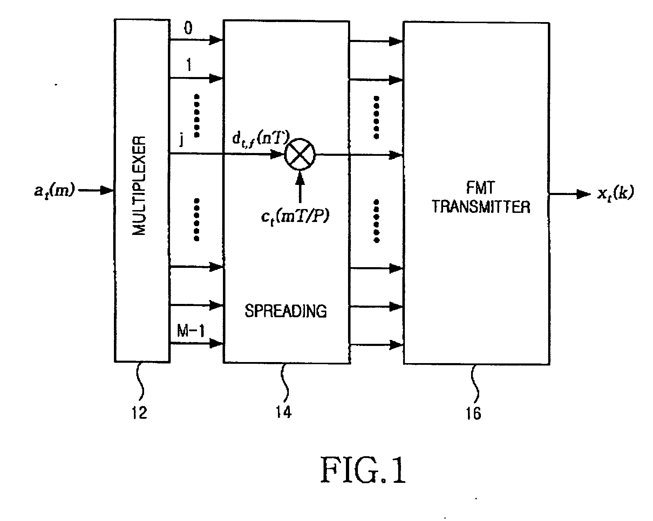

FIG. 1 is a block diagram of a transmitter which employs a conventional FMT modulation method. Referring to FIG. 1, α_{*i*}*(m)* representing a transmitting signal of user i is multiplexed in a multiplexer 12 and is split into signals of the respective subchannels. Assuming that an input signal cycle is *T, d*_{*ij*}*(nT)* representing a symbol of subchannel j is multiplied by a chip signal *c*_{*i*}*(mT*/*P)* a cycle of which is *T*/*P* by means of a spreader 14 and the FMT sender sends this spread signal after filtering and inverse fast Fourier transform (IFFT).

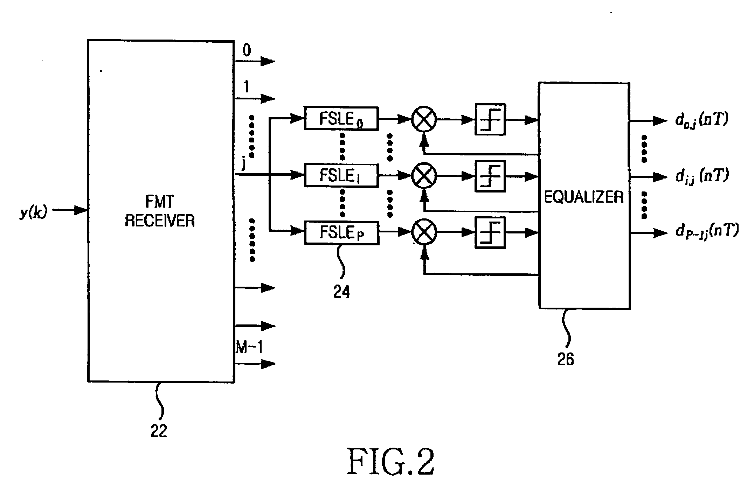

FIG. 2 is a block diagram of a receiver which employs a conventional FMT modulation method. Referring to FIG 2, a received signal goes through filter bank demodulation (FBD) and despreading by the FMT receiver and the despread signal is detected as a multiuser signal through an interference suppression function of a fractionally-spaced linear equalizer (FSLE). Here, an input signal *y(k)* is demodulated by the FMT receiver 22 and the received signal of the j-th subchannel from among the outputs of the FMT receiver passes in turn through P independent FSLEs 24 and an orthogonal connection decision feedback equalizer (orthogonal connection DFE) 26. The signal having passed through the DFE is used for transmitting signals of the respective users.

### SUMMARY OF THE INVENTION

However, the so-constructed conventional FMT method has a drawback in that execution frequency of IFFT within the FMT sender is increased by P times as many as a symbol cycle.

Accordingly, the present invention has been made to solve at least the above-mentioned problems occurring in the prior art, and an object of the present invention is to provide a multiple access method capable of reducing the number of IFFTs by executing an IFFT every symbol cycle T.

Another object of the present invention is to provide a multiple access method that does not require synchronization between users, who use different channels from each other in a uplink, by using different prototype filters from each other for the respective users.

In order to accomplish these objects, there is provided a transmitter for a multicarrier-base wireless communication system in accordance with one aspect of the present invention, the transmitter including a multiplexer for multiplexing an input signal and outputting the signal as a plurality of transmitting signals, a sender unit for filtering and sending the plurality of transmitting signals, and a filter information generator for providing to the sender unit filter information necessary for the filtering.

In another aspect of the present invention, there is provided a transmitter for a multicarrier-based wireless communication system including a base station for providing a multiple access service to terminals which filter multitonc transmitting signals through filters and transmit the filtered signals, the transmitter including a multiplexer for multiplexing an input signal and outputting the signal as a plurality of transmitting signals, at least one filter bank for filtering the plurality of transmitting signals, an inverse fast Fourier transformer for executing inverse fast Fourier transform of the filtered transmitting signals output from the filter bank, and a filter information generator for providing filter information to the filter bank.

In further another aspect of the present invention, there is provided a transmitting method in a multicarrier-bascd wireless communication system, the transmitting method including the steps of multiplexing an input signal as transmitting signals with different frequency bands from each other in a frequency region, filtering the transmitting signals in parallel by using filters of the relevant frequency bands, and executing inverse fast Fourier transform of the transmitting signals in an input signal cycle and transmitting the transformed signals.

In still further another aspect of the present invention, there is a transmitting method in a multicarrier-based wireless communication system including a base station for providing a multiple access service to terminals which filter multitone transmitting signals through filters and transmit the filtered signals, the transmitting method including the steps of setting the filters to filter specific frequency bands, multiplexing an input signal as transmitting signals having different frequency bands from each other in a frequency region, filtering the transmitting signals by passing the signals in parallel through the filters, and executing inverse fast Fourier transform of the transmitting signals in an input signal cycle and transmitting the transformed signals.

### BRIEF DESCRIPTION OF THE DRAWINGS

The above and other objects, features and advantages of the present invention will be more apparent from the following detailed description taken in conjunction with the accompanying drawings, in which:
FIG 1 is a block diagram showing a structure of a transmitter which uses a conventional FMT modulation method;
FIG. 2 is a block diagram showing a structure of a receiver which uses a conventional FMT modulation method;
FIG. 3 is a block diagram showing a structure of a receiver in accordance with a preferred embodiment of the present invention;
FIG. 4 is a block diagram showing in more detail the FMT transmitter in FIG. 3; and
FIG. 5 is a flow chart for explaining a multicarrier-based signal transmitting method in accordance with a preferred embodiment of the present invention.

### DETAILED DESCRIPTION OF THE PREFERRED EMBODIMENT

Hereinafter, preferred embodiments according to the present invention will be described with reference to the accompanying drawings. In the following description of the present invention, a detailed description of known functions and configuration incorporated herein will be omitted when it may obscure the subject matter of the present invention.

In a signal transmitting method in accordance with the present invention, input signals are spread and transmitted at intervals of T by using prototype filters having a frequency band of *P*/*T.* In other words, signals, which are input at intervals of T and are not yet spread, are transmitted by using a FMT sender having an upsampling ratio of *P x K* in the transmitting method in accordance with the present invention. Users are distinguished from each other by using a prototype filter having a frequency band of *P*/*T*.

One preferred embodiment of the present invention will be described below by giving an example of an uplink transmission of a multicarrier-based communication system.

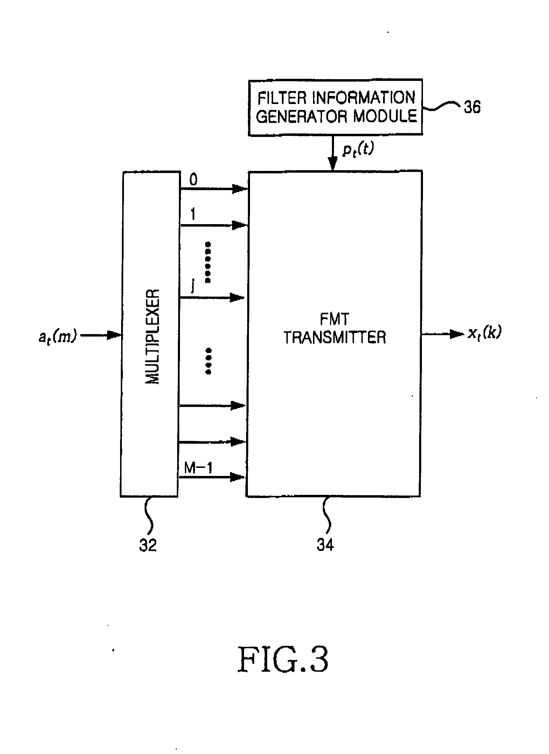

FIG 3 is a block diagram showing a structure of a sender in accordance with a preferred embodiment of the present invention.

As shown in FIG. 3, the transmitter in accordance with this embodiment includes a multiplexer 32 for multiplexing an input signal *α*_{*i*}*(m)*, a FMT transmitter 34 for filtering and transmitting parallel signals, and a filter information generator module 36 for storing or generating and providing necessary filter information to the FMT sender 34.

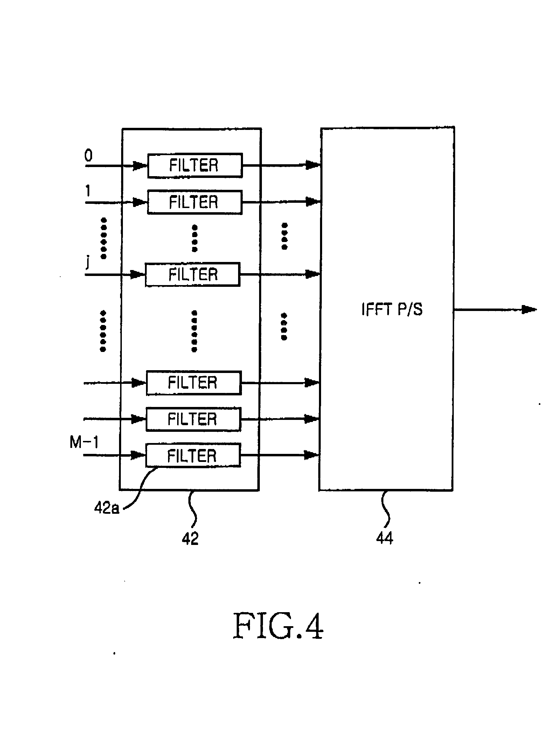

FIG 4 is a block diagram showing in more detail the structure of the FMT transmitter 34 in FIG. 3.

The FMT transmitter module 34 comprises at least one filter bank 42 including a plurality of filter taps 42a and an inverse fast Fourier transformer 44 for executing inverse Fourier transform of signals output from the filter taps 42a.

In the so-constructed transmitter, if a user's input signal *α*_{*i*}*(m)* is input, the multiplexer 32 multiplexes the input signal *α*_{*i*}*(m)* in a frequency region and outputs parallel symbols. Each symbol passes through a corresponding filter tap 42a of the filter bank 42 of the FMT sender module 34 and then is transmitted through a wireless channel. In such a process, the signal filtered by the prototype filter bank 42 has a user specific filter characteristic, so that users can be distinguished from each other by using the filter characteristic on the receiving side. The receiver can process a received signal by applying the existing method which uses filter bank demodulation (FBD) and a FSLE.

The filter characteristic of the filter bank 42 is determined by filter information provided from the filter information generator module 36, and the filter information generator module 36 may be a memory medium in which the user specific filter information are stored or a generator device which generates necessary filter information according to a proper filter information generating algorithm. Also, the filter information may be generated based on a channel allocated from the base station.

In a case that the filter information is stored in the filter information generator, the filter information can also be stored in a format of a channel-filter value mapping table for matching channels, which can be allocated from the base station, to predetermined filter values corresponding to the relevant channels. Consequently, the filter information generator module 36 searches a corresponding filter value in a mapping table according to a channel allocated from the base station and then provides the searched value to the filter bank 42, and the filter bank 42 sets the filter tap 42a dependent on the filter values provided.

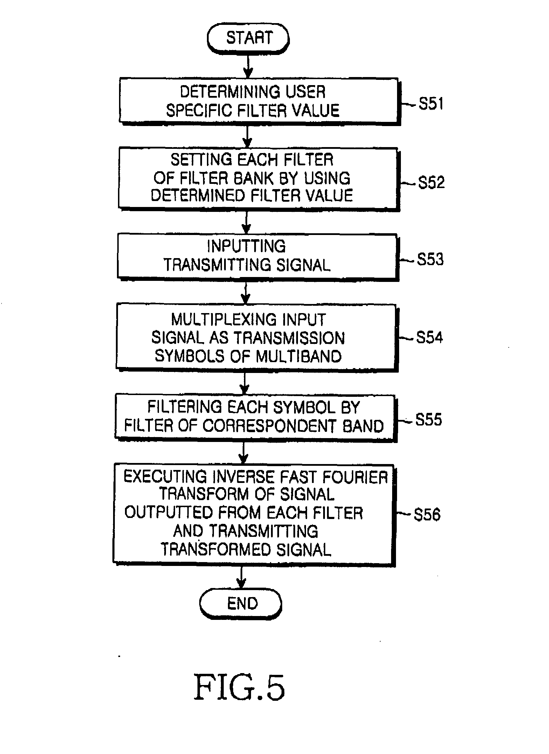

FIG. 5 is a flow chart for explaining a multicarrier-based signal transmitting method in accordance with a preferred embodiment of the present invention.

In a multicarrier-based communication system, first, a transmitting party (terminal or base station) and a receiving party (base station or terminal) determine an user specific filter value (S51) by exchanging a control signal with each other, and set transmitting and receiving filter banks for the relevant user according to the determined filter value (SS2). Of course, filter values deferent from each other are allocated to all terminals communicating with the same base station, and thus the filter banks are set individually.

If subordinate filter taps 42a of the filter bank 42 have been set to filter specific frequency bands through the above-mentioned processes and then a transmitting signal is input to each transmitter (S53), the transmitting signal is split into a plurality of transmission symbols by way of multiplexing (S54) and is filtered while passing through the filters which are set by the filter values allocated to the relevant transmitters (S55). The symbols having passed through their respective correspondent band filters are processed by inverse fast Fourier transform and then are transmitted through a wireless channel (S56).

If the receiver receives the transmitting signal from a certain transmitter, it confirms the relevant transmitter based on filter information included in the transmitting signal and executes demodulation.

As described above, in a transmitting technique according to the present invention, spreading effect can be obtained by using a prototype filter with a frequency band of *P*/*T* (here, *T* is an input signal cycle and *P* is a spreading length) for filtering, instead of by spreading a multiplexed signal by a spreading coefficient. Also, inverse fast Fourier transform is executed in an input signal cycle, so that the number of inverse fast Fourier transforms can be reduced as compared to the prior art.

Furthermore, since users are distinguished from each other by a filter and thus no synchronization is required between users, which causes a problem in an uplink of a multicarrier-based wireless communication system, system performance can be expected to be improved.

While the invention has been shown and described with reference to certain preferred embodiments thereof, it will be understood by those skilled in the art that various changes in form and details may be made therein without departing from the spirit and scope of the invention as defined by the appended claims.

## Claims

1. In a multicarrier-base wireless communication system, a transmitter comprising:
a multiplexer for multiplexing an input signal and outputting the signal as a plurality of transmitting signals;
a transmitter unit for filtering and transmitting the plurality of transmitting signals; and
a filter information generator for providing to the transmitter unit filter information necessary for filtering.

2. The transmitter as claimed in claim 1, wherein the transmitter unit includes at least one filter bank comprising a plurality of filters for filtering in parallel the transmitting signals.

3. The transmitter as claimed in claim 2, wherein the filter information generator stores filter information for at least one receiver.

4. The transmitter as claimed in claim 2, wherein the filter information generator generates the filter information according to information provided from an external source.

5. The transmitter as claimed in claim 1, wherein the transmitter unit includes a filter bank comprising a plurality of filters for filtering in parallel the transmitting signals and an inverse fast Fourier transformer for executing inverse fast Fourier transform of signals output from the filters of the filter bank.

6. The transmitter as claimed in claim 5, wherein the filter information generator stores filter information for at least one receiver.

7. The transmitter as claimed in claim 5, wherein the filter information generator generates the filter information according to information provided from a base station.

8. The transmitter as claimed in claim 6, wherein the inverse fast Fourier transformer executes inverse fast Fourier transform of the transmitting signals in an input signal cycle.

9. The transmitter as claimed in claim 7, wherein the inverse fast Fourier transformer executes inverse fast Fourier transform of the transmitting signals in an input signal cycle.

10. In a multicarrier-based wireless communication system including a base station for providing a multiple access service to terminals which filter multitone transmitting signals through filters and transmit the filtered signals, a transmitter comprising:
a multiplexer for multiplexing an input signal and outputting the signal as a plurality of transmitting signals;
at least one filter bank for filtering the plurality of transmitting signals;
an inverse fast Fourier transformer for executing inverse fast Fourier transform of the filtered transmitting signals output from the filter bank; and
a filter information generator for providing filter information to the filter bank,

11. The transmitter as claimed in claim 10, wherein the filter bank comprises a plurality of filters for filtering in parallel the transmitting signals.

12. The transmitter as claimed in claim 11, wherein the filter information generator stores filter information for at least one receiver.

13. The transmitter as claimed in claim 11, wherein the filter information generator generates the filter information according to information provided from the base station.

14. The transmitter as claimed in claim 11, wherein the inverse fast Fourier transformer executes inverse fast Fourier transform of the transmitting signals in an input signal cycle.

15. In a multicarrier-based wireless communication system, a transmitting method comprising the steps of:
multiplexing an input signal as transmitting signals with different frequency bands in a frequency region;
filtering the transmitting signals in parallel using filters of the different frequency bands; and
executing inverse fast Fourier transform of the transmitting signals in an input signal cycle and transmitting the transformed signals.

16. The transmitting method as claimed in claim 15, wherein the filters are set by using filter information stored in a separate memory.

17. , The transmitting method as claimed in claim 15, wherein the filters are set by using filter information provided from an external source.

18. In a multicarrier-based wireless communication system including a base station for providing a multiple access service to terminals which filter multitone transmitting signals through filters and transmit the filtered signals, a transmitting method comprising the steps of:
setting a plurality of filters to filter specific frequency bands;
multiplexing an input signal as transmitting signals having different frequency bands in a frequency region;
filtering the transmitting signals by passing the signals in parallel through the plurality filters; and
executing inverse fast Fourier transform of the transmitting signals in an input signal cycle and transmitting the transformed signals.

19. The transmitting method as claimed in claim 18, wherein the filters are set by using filter information stored in a separate memory device.

20. The transmitting method as claimed in claim 18, wherein the filters are set by using filter information provided from the base station.

21. The transmitting method as claimed in claim 19, wherein the terminals are distinguished from each other by the filter information.

22. The transmitting method as claimed in claim 20, wherein the terminals arc distinguished from each other by the filter information.
